# EUROPEAN PATENT APPLICATION

(11) **EP 4 424 562 A1**
(43) Date of publication of application: **04.09.2024**
(21) Application number: 23159208.0
(22) Date of filing: 28.02.2023
(51) Int. Cl.: B60S 1/38

(54) **END FITTING FOR A WIPER BLADE**

(71) Applicant: Valeo Systèmes d'Essuyage, 78322 Le Mesnil Saint Denis (FR)
(72) Inventor: JABLECKI, Sebastian, 32 050 Skawina (PL)
(74) Representative: Valeo Visibility

(57) **Abstract**

An end fitting (101, 201, 301) for a vehicle window wiper, the end fitting (101, 201, 301) comprising a lower face (107, 207, 307) extending in a plane (P, P1, P2), the end fitting (101, 201, 301) comprising a first part (105, 205, 305) made of a first material, and a second part (106, 206, 306) made of a second material, the second material being more flexible than the first material, the second part (106, 206, 306) being at least in contact with said plane (P, P1, P2).

## Description

### Technical field

The field of the present invention is that of wipers used on motor vehicles. The invention relates particularly to an end fitting mounted at the end of a wiper. The invention also relates to an assemble comprising a wiper and at least one said end fitting.

In a known manner, wiper systems for motor vehicles include at least one drive arm and a wiper blade which includes a squeegee blade intended to be brought to bear against a glass surface of the motor vehicle. The drive arm is driven in a back-and-forth angular movement against the glass surface of the motor vehicle, during which it drives the wiper blade and its squeegee blade so that it rubs the glass surface and thus removes water, dirt and dust that may impede the motor vehicle driver's view of his surroundings.

In a known manner, the wiper blade is attached to the drive arm by a connection assembly that comprises a connector integral with the wiper blade and an adapter configured to cooperate with the wiper blade and with an end portion of the drive arm. This connection assembly is configured, on the one hand, to allow the reciprocating movements of the wiper blade against the glass surface in question, and, on the other hand, to guarantee an effective flattening of the wiper blade against the glass surface in order to achieve an effective wiping and/or cleaning.

The support and the squeegee blade are locked by end fittings mounted on each end of the blade.

Each end fitting is produced so as to be locked on the associated end of the support and so as to form a longitudinal stop for the associated ends of the support and squeegee blade.

A disadvantage of known automotive systems is that when the glass surface is highly curved, for example on the sides of a windshield, the end caps may scratch the glass when the wiper arm is in certain positions.

The invention proposes an end fitting for a wiper blade that is able to avoid scratches on the glass surface during wiping.

### Summary of the invention

For this purpose, the invention proposes an end fitting for a vehicle window wiper, the end fitting comprising a lower face extending in a plane, the end fitting comprising a first part made of a first material, and a second part made of a second material, the second material being more flexible than the first material, the second part being at least in contact with said plane.

According to one aspect of the invention, the second part is configured to come between a window and the first part.

According to one aspect of the invention, the second part is made of an elastic plastic material, for example ethylene propylene diene monomer (EPDM) rubber.

According to one aspect of the invention, the first part is made of a rigid plastic material, for example acrylonitrile butadiene styrene (ABS).

According to one aspect of the invention, the vehicle window wiper comprises at least one longitudinal support and a squeegee blade intended to be pressed against the window, the second part of the end fitting is made of the same material as the squeegee blade.

In one aspect of the invention, the lower face comprises a slot configured to retain the squeegee blade.

According to one aspect of the invention, the second part is made of a material which is different from the squeegee blade material.

According to one aspect of the invention the first part is made of a single piece.

According to one aspect of the invention, the second part is made of a single piece.

According to one aspect of the invention, the second part extends at least partially along the plane of which the lower face of the end fitting extends.

According to one aspect of the invention, the second part extends totally along the lower face plane of which the lower face of the end fitting extends.

According to one aspect of the invention, the second part comprises at least a protrusion that protrudes beyond said plane in a direction intersecting with said plane.

According to one aspect of the invention, the second part comprises at least a protrusion that protrudes beyond said plane in a direction opposite to said plane.

According to one aspect of the invention, the protrusion is a lip configured to protrude in a direction intersecting with said plane.

According to one aspect of the invention, the protrusion is a lip configured to protrude in a direction opposite to said plane.

According to one aspect of the invention, the first part comprises a receiving area configured to receive a connecting area of the second part, said receiving area and said connecting area being complementary to each other.

According to one aspect of the invention, the first part is at least partially adjacent to the second part.

According to one aspect of the invention, the second part is configured to fit into the first part.

According to one aspect of the invention, the second part is housed in the first part.

According to one aspect of the invention, the second part comprises a hollow.

According to another aspect of the invention, the second part is filled with the second material.

According to one aspect of the invention, the end fitting comprises a rear longitudinal face configured to be pressed against the window and a front longitudinal face opposite to said rear longitudinal face, said rear and front longitudinal faces comprising a lower area, the second part extending at least partially along said lower area of at least one of the rear and/or front longitudinal face.

According to one aspect of the invention, the second part extends at least partially along the lower area of the rear longitudinal face.

According to one aspect of the invention, the rear longitudinal face is at least partially adjacent to the connecting area of the second part.

According to one aspect of the invention, the second part extends all along the lower area of the rear longitudinal face.

According to one aspect of the invention, the lower area of the rear longitudinal face is part of the second part.

According to one aspect of the invention, the lower area of the rear longitudinal face is made of the first material.

According to one aspect of the invention, the first part made of the first material comprises an insertion slot, said insertion slot being at the intersection of the lower area of the rear longitudinal face and the lower face of the end fitting, said slot being configured to be crossed by the protrusion.

According to one aspect of the invention, the second part extends at least partially along the lower area of the front longitudinal face.

According to one aspect of the invention, the front longitudinal face is at least partially adjacent to the connecting area of the second part.

According to one aspect of the invention, the second part extends all along the lower area of the long longitudinal face.

According to one aspect of the invention, the lower area of the front longitudinal face is part of the second part.

According to one aspect of the invention, the lower area of the front longitudinal face is made of the first material.

According to one aspect of the invention, the first part made of the first material comprises an insertion slot, said insertion slot being at the intersection of the lower area of the front longitudinal face and the lower face of the end fitting, said slot being configured to be crossed by the protrusion.

According to one aspect of the invention, the protrusion is intended to be pressed against a window.

According to one aspect of the invention, the second part is configured to be overmolded on the first part.

According to one aspect of the invention, the second part is fixed to the first part by at least one fastening means.

According to one aspect of the invention, the fastening means is chosen for example among glue, clips or welding.

The purpose of the invention is also to propose an assembly comprising:
- A wiper comprising one longitudinal support and a squeegee blade intended to be pressed against the window,
- At least an end fitting according to any one of the features set out above configured to be positioned at least one end part of wiper.

Further features, details and advantages of the invention will become more clearly apparent from reading the description given below by way of indication with reference to the drawings, in which:
[FIG. 1] is a perspective view of an end fitting according to the prior art,
[Fig. 2] is an overall perspective view of a wiper according to the invention,
[Fig. 3] is a perspective view of an end fitting according to a first embodiment of the invention,
[Fig. 4] is a perspective front view of the end fitting according to FIG. 3,
[Fig. 5] is a perspective view of the end fitting according to a second embodiment,
[Fig. 6] is a perspective front view of the end fitting according to FIG. 5,
[Fig. 7] is a perspective view of the end fitting according to a third embodiment,
[Fig. 8] is a perspective front view of the end fitting according to FIG. 7,
[Fig. 9] is a perspective view of the end fitting according to a fourth embodiment,
[Fig. 10] is a perspective front view of the end fitting according to FIG. 9.

It should first of all be noted that the figures disclose the invention in a detailed manner so as to implement the invention, and said figures may of course serve to define the invention more clearly, where necessary.

In the rest of the description, the denominations longitudinal or lateral, top, bottom, front, rear refer to the orientation of the wiper or of the end fitting according to the invention. The longitudinal direction corresponds to the main axis of the wiper along which it extends, while the lateral orientations correspond to concurrent straight lines, that is to say straight lines which intersect the longitudinal direction, notably perpendicularly to the longitudinal axis of the wiper in the plane in which it rotates. For longitudinal directions, the denomination rear and front are to be assessed in relation axis of the squeegee blade in the slot. The denomination rear corresponds to the part arranged to be pressed against the window. Finally, directions referenced as being upper or lower correspond to orientations perpendicular to the longitudinal direction, the denomination lower comprising the plane of the windscreen and the slot configured to mechanically retain a heel of a squeegee blade.

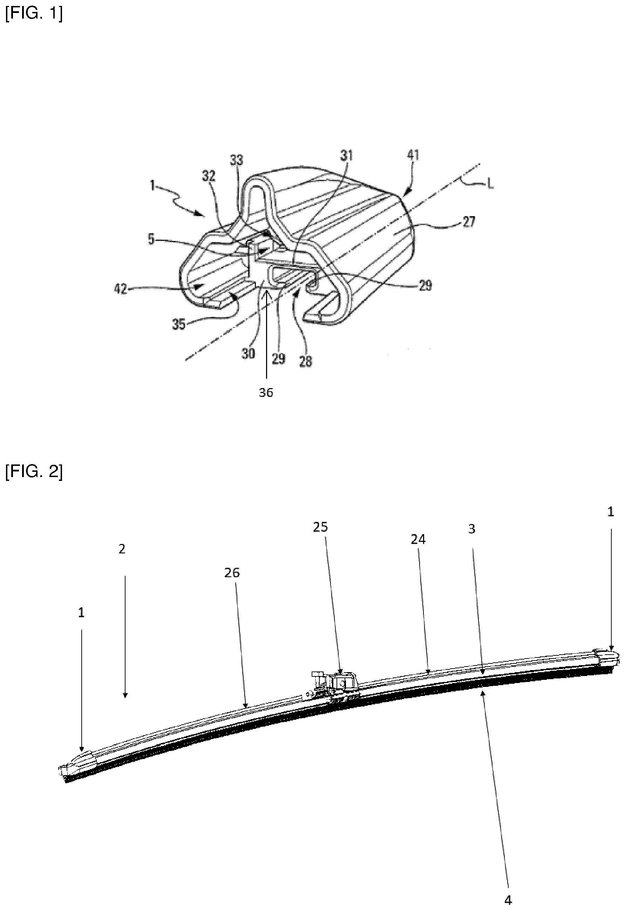

Figure 1 shows a perspective view of an end fitting 1 according to the prior art. Such an end fitting 1 has a function of mechanically holding the constituent components of the wiper 2. This end fitting 1 also has an aesthetic function since it makes it possible to cleanly cover and thus conceal the end of the squeegee blade 4, the end of the longitudinal support 3 and the end of the component 24, notably the air deflector 26.

The end fitting 1 has an outside wall 27 generally complementary to the outside profile of the air deflector 26. Inside an internal volume 42 delimited by the outside wall 27, the end fitting 1 comprises a housing 5 for receiving the end part of the longitudinal support 3, not shown in these figures. The end fitting 1 also comprises a slot 28, the function of which is to mechanically retain a heel of the squeegee blade 4. Such a slot 28 is formed in a body 30 of the end fitting 1, in particular in a lower part of this body, and more particularly on a lower face 36 of the end fitting 1. This slot 28 is open towards the outside, this opening being delimited by two hooks 29 which extend longitudinally along the end fitting 1.

The housing 5 is formed in the body 30 of the end fitting, between the slot 28 and the outside wall 27, as seen in a direction perpendicular to a plane of extension of the slot 28. The housing 5 is delimited by a bottom wall 31 and at least two side edges 32, and also by at least one flank 33, and notably two flanks 33. These flanks 33 are each formed by a rib made in one piece with the outside wall 27. These flanks 33 are connected together by a bridge of material 34. The flanks 33 extend in planes perpendicular to a plane in which the bottom wall 31 extends, and thus parallel to planes of extension of the side edges 32.

The end fitting 1 comprises a rear part 41 which closes the internal volume 42 of the end fitting 1 by means of the outside wall 27. At the end away from this rear part with respect to the housing 5 in the longitudinal direction L, the end fitting 1 is open and the outside wall 27 delimits a reception zone 35. The latter receives notably at least one of the components of the wiper, for example one end of the air deflector, which is housed in the reception zone 35.

The end fitting 1 of the fig. 1 is integrally made of at least one rigid material.

Referring to Figure 2, a wiper 2 according to the invention can be seen. Such a wiper 2 is used to wipe a window of a vehicle and to move the water present on this window out of a driver's field of view. The wiper 2 is made up of at least one longitudinal support 3, a component 24, a squeegee blade 4 and at least one, or even two, end fittings 1 that are installed on each end part of the longitudinal support 3. The longitudinal support 3 is advantageously flexible.

The longitudinal support 3 may take the form of a single flat and elastic metal strip. According to one alternative, the longitudinal support 3 may be formed by two metal and elastic strips that are each housed in a slot formed on either side of the squeegee blade 4. In the two cases above, in the rest state, such a metal strip is curved in a plane perpendicular to a longitudinal direction of the strip. The function of such a metal strip, whether there is one or two thereof, is to distribute along the squeegee blade 4 the bearing forces that are generated by a connection means 25 attached to the longitudinal support at the center, longitudinally, of the wiper 2.

The component 24 denotes several types of constituent part of the wiper 2. It may be the connection means 25 intended to connect the wiper to an arm for driving this wiper in rotation. It may also be one or more air deflectors 26 which are attached to the longitudinal support 3 and the function of which is to convert the air flow passing over the wiper into a bearing force which presses the blade 4 against the window.

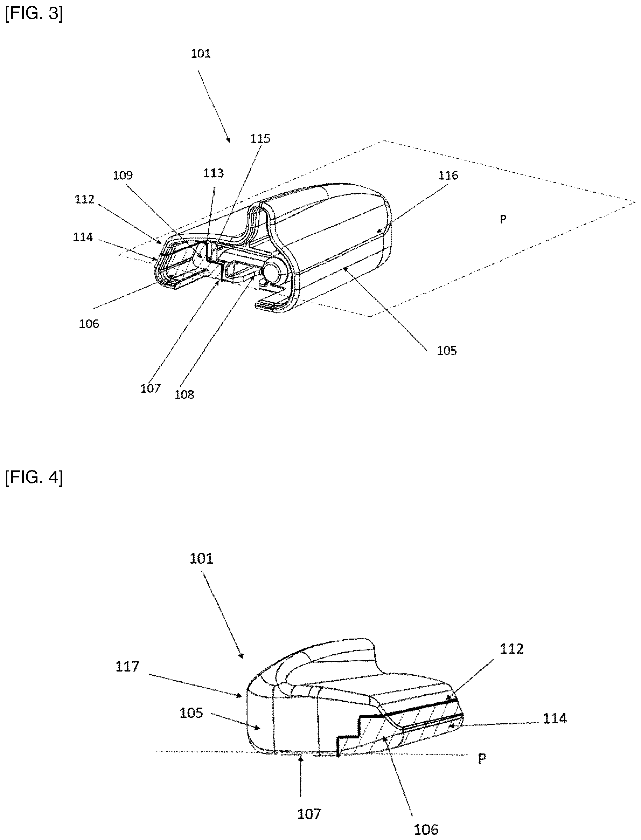

The wiper 2 also comprises two end fittings 1 of identical form, as described below with reference to Figures 3 to 9.

Figures 3 and 4 show perspective views of the end fitting 101 according to a first embodiment of the invention.

The end fitting 101 differs from the end fitting of Fig. 2 in that it comprises a first part 105 made of a rigid plastic material, for example acrylonitrile butadiene styrene (ABS); and a second part 106 made of a more flexible material, for example ethylene propylene diene monomer (EPDM) rubber. The end fitting 101 comprises a lower face 107, said lower face 107 extending in a plane P and said lower face being provided with a slot 108 open towards the outside. The slot 108 is configured to mechanically retain a heel of a squeegee blade 4. The second part 106 is made of a material with elastic properties that eliminates the risk of scratching the glass while ensuring effective wiping. In this embodiment, the second part 106 extends along the plane P. The second part 106 is configured to at least partially make contact with the window to be wiped at certain wiping positions. The second part 106 being in contact with the plane in which the lower face of the end fitting 101 extends, the end fitting 101 does not scratch the window during wiping. The second part 106 allows to protect the glass from the first part 105 of the end clip which is made of a less flexible material.

In this embodiment, the first part 105 comprises a receiving area 113 configured to receive a connecting area 109 of the second part 106. The receiving area 113 of the first part 105 and the connecting area 109 of the second part 106 are complementary to each other. The end fitting 101 comprises a front longitudinal face 112 and a rear longitudinal face 112 having a lower area 114, said rear longitudinal face being adjacent to the connecting area 109 of the second part 106. In this example, the second part 106 extends all along the lower area 114 of the rear longitudinal face 112. In this embodiment, the lower area 114 face of the rear longitudinal face 112 of the end fitting 101 is entirely made of the second material.

In this embodiment, the receiving area 109 of the first part 105 and the connecting area 113 of the second part 106 have complementary shapes. On this embodiment, the shapes of the connecting area 113 and the receiving area 109 comprise at least an angle 115.

In the first embodiment, the second part 106 is overmolded on the first part 105.

In another embodiment, the first 105 and the second 106 parts may be fixed with fixation means, for instance clips or glue.

In this embodiment, the second part 106 is configured to make contact with a glass surface, such as a window or a windscreen, at certain wiping positions of a window wiper, and to come between the first part 105 which is made of a rigid material and said window. In consequence, scratches that could be made by the first part 105 against the window are avoided.

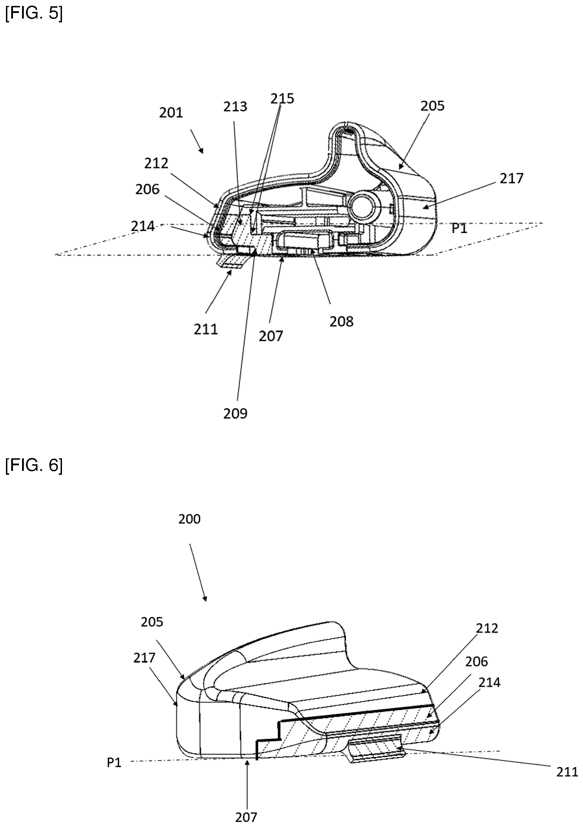

Figures 5 and 6 show perspective views of the end fitting 201 according to a second embodiment of the invention.

The end fitting 201 of the second embodiment differs from the end fitting 1 of Fig. 1 in that it comprises a first part 205 made of a rigid plastic material, for example acrylonitrile butadiene styrene (ABS); and a second part 206 made of a more flexible material, for example ethylene propylene diene monomer (EPDM) rubber. The end fitting 201 comprises a lower face 207, said lower face 207 extending in a plane P1 and said lower face 207 provided with a slot 208 open towards the outside. The slot 208 is configured to mechanically retain a heel of a squeegee blade 4. The second part 206 is made of a material with elastic properties that eliminates the risk of scratching the glass while ensuring effective wiping. In this embodiment, the second part 206 extends along the plane P1 and comprises a protrusion 211, or a lip 211, which protrudes beyond the plane P1 in a direction that intersects with the plane P1. The second part 206 is configured to make at least partially contact with the window to be wiped at certain wiping positions. The second part 206 being in contact with the plane P1 in which the lower face 207 of the end fitting 201 extends, the end fitting 201 does not scratch the window during wiping. The second part 206 allows to protect the glass from the first part 205 of the end clip which is made of a less flexible material.

In this embodiment, the first part 205 comprises a receiving area 213 configured to receive a connecting area 209 of the second part 206. The receiving area 213 of the first part 205 and the connecting area 209 of the second part 206 are complementary to each other. The end fitting 201 comprises a front longitudinal face 212 and a rear longitudinal face 212 having a lower area 214, said rear longitudinal face being adjacent to the connecting area 209 of the second part 206. In this example, the second part 206 extends all along the lower area 214 of the rear longitudinal face 212. In this embodiment, the lower area 214 of the rear longitudinal face 212 of the end fitting 201 is integrally made of the second material.

In this embodiment, the protrusion 211 extends only partially along the lower area 214 of the rear longitudinal face 212 of the end fitting 201. In another embodiment, the protrusion 211 could extend all along the lower area 214 of the rear longitudinal face 212 of the end fitting 201.

In an embodiment, the protrusion 211 is formed all along the longitudinal face 212 of the end fitting 201. The protrusion 211 can be freely designed. In an embodiment, the shape of the protrusion 211 depends on the glass surface shape and/or the drive arm shape.

In this embodiment, the second part 206 comprising the protrusion 211 is made of a single piece.

In this embodiment, the receiving area 209 of the first part 205 and the connecting area 213 of the second part 206 have complementary shapes. On this embodiment, the shapes of the connecting area 213 and the receiving area 109 comprise at least an angle 215.

In the first embodiment, the second part 206 is overmolded on the first part 205.

In another embodiment, the first 205 and the second 206 parts are fixed with fixation means, for instance clips or glue.

In this embodiment, the second part 206 comprising the protrusion 211 is configured to make contact with a glass surface, such as a window or a windscreen, at certain wiping positions of a window wiper, and to come between the first part 205, which is made of a rigid material, and said glass surface. Consequently, scratches that might result from contact between the first part 205 and the windscreen are avoided.

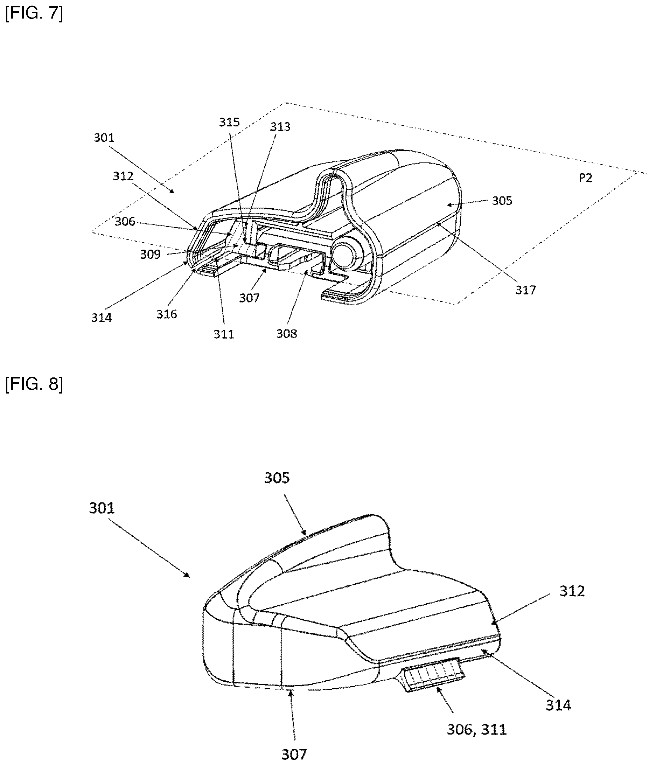

Figures 7 and 8 show perspective views of the end fitting 301 according to a third embodiment of the invention.

The end fitting 301 of the second embodiment differs from the end fitting 1 of Fig. 1 in that it comprises a first part 305 made of a rigid plastic material, for example ABS, and a second part 306 made of a more flexible material, for example EPDM. The end fitting 301 comprises a lower face 307, said lower face 307 extending in a plane P2 and said lower face 307 being provided with a slot 308 open towards the outside. The slot 308 is configured to mechanically retain a heel of a squeegee blade 4. The second part 306 is made of a material with elastic properties that eliminates the risk of scratching the glass while ensuring effective wiping. In this embodiment, the second part 306 makes contact with then plane P2 by protruding beyond said plane P2. The second part 306 comprises a protrusion 311, or a lip 311, which protrudes from the plane P2 in a direction that intersects with the plane P2. The protrusion 311 is configured to make at least partially contact with the window to be wiped at certain wiping positions. The second part protrusion 311 being in contact with the plane P2 in which the lower face 307 of the end fitting 301 extends, the end fitting 301 does not scratch the window during wiping. The second part 306, and more precisely the protrusion 311 allows to protect the glass from the first part 305 of the end clip 301 which is made of a less flexible material.

In this embodiment, the first part 305 made of the first material comprises an insertion slot 316, said insertion slot 316 being at the intersection of the lower area 314 of the rear longitudinal face 312 and the lower face 307 of the end fitting 301, said insertion slot 316 being configured to be crossed by the protrusion 311.

In this embodiment, the first part 305 comprises a receiving area 313 configured to receive a connecting area 309 of the second part 306. The receiving area 313 of the first part 305 and the connecting area 309 of the second part 306 are complementary to each other. The end fitting 301 comprises a front longitudinal face 312 and a rear longitudinal face 312 having a lower area 314, said rear longitudinal face being adjacent to the connecting area 309 of the second part 306. In this example, the second part 306 extends partially along the lower area 314 of the rear longitudinal face 312. In this embodiment, the lower area 314 of the rear longitudinal face 312 of the end fitting 301 is integrally made of the first material.

In this embodiment, the receiving area 309 of the first part 305 and the connecting area 313 of the second part 306 have complementary shapes. On this embodiment, the shapes of the connecting area 313 and the receiving area 309 comprise at least an angle 315.

In the first embodiment, the second part 306 is overmolded on the first part 305.

In another embodiment, the first 305 and the second 306 parts are fixed to each other, for instance with clips or glue.

In this embodiment, the protrusion 311 is configured to make contact with a glass surface, such as a window or a windscreen, at certain wiping positions of a window wiper, and to come between the first part 305 which is made of a rigid material and said window. In consequence, scratches that could be made by the first part 305 against the window are avoided.

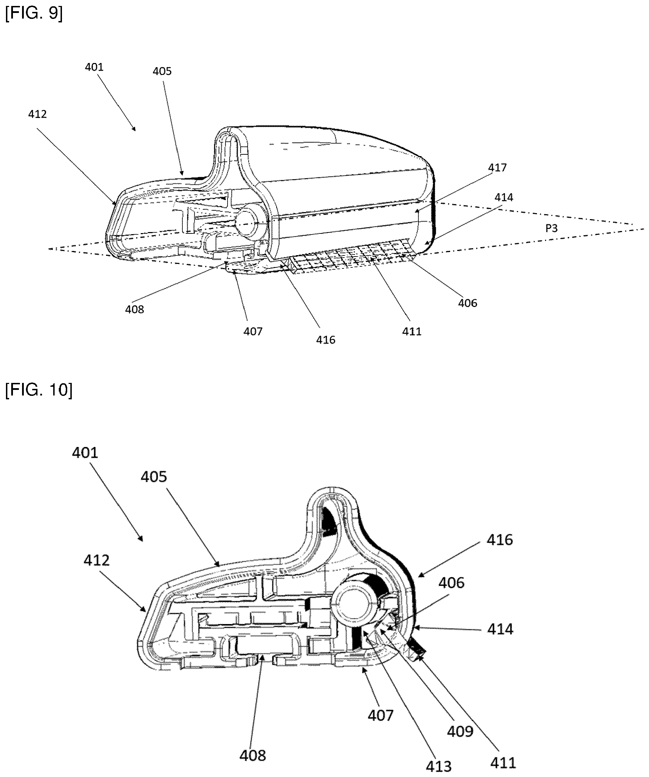

Figures 9 and 10 show perspective views of the end fitting 401 according to a third embodiment of the invention.

The end fitting 401 of the second embodiment differs from the end fitting 1 of Fig. 1 in that it comprises a first part 405 made of a rigid plastic material, for example ABS ; and a second part 406 made of a more flexible material, for example EPDM . The end fitting 401 comprises a lower face 407, said lower face 407 extending in a plane P3 and said lower face 407 being provided with a slot 408 open towards the outside. The slot 408 is configured to mechanically retain a heel of a squeegee blade 4. The second part 406 is made of a material with elastic properties that eliminates the risk of scratching the glass while ensuring effective wiping. In this embodiment, the second part 406 makes contact with then plane P3 by protruding beyond said plane P3. The second part 406 comprises a protrusion 411, or a lip 411, which protrudes from the plane P3 in a direction that intersects with the plane P3. The protrusion 411 is configured to make at least partially contact with the window to be wiped at certain wiping positions. The second part protrusion 411 being in contact with the plane P3 in which the lower face 407 of the end fitting 401 extends, the end fitting 401 does not scratch the window during wiping. The second part 406, and more precisely the protrusion 411 allows to protect the glass from the first part 405 of the end clip 401 which is made of a less flexible material.

In this embodiment, the first part 405 comprises a receiving area 413 configured to receive a connecting area 409 of the second part 406. The receiving area 413 of the first part 405 and the connecting area 409 of the second part 406 are complementary to each other. The end fitting 401 comprises a rear longitudinal face 412 and a front longitudinal face 416 having a lower area 414, said front longitudinal face being adjacent to the connecting area 409 of the second part 406. In this example, the second part 406 extends partially along the lower area 414 of the front longitudinal face 416.

In this embodiment, the first part 405 made of the first material comprises an insertion slot 316, said insertion slot 416 being at the intersection of the lower area 414 of the front longitudinal face 417 and the lower face 407 of the end fitting 401, said insertion slot 416 being configured to be crossed by the protrusion 411.

In this embodiment, the second part 406 comprising the protrusion 411 is made of a single piece.

The first 405 and the second 406 parts can be fixed with at least a clip, with glue or the receiving part 413 and the connecting area 409 could be overmolded.

In this embodiment, the protrusion 411 is configured to make contact with a glass surface, such as a window or a windscreen, at certain wiping positions of a window wiper, and to come between the first part 405 (which is made of a rigid material) and said window. Consequently, scratches in the glass surface that might otherwise be made by the contact between first part 305 and the window are avoided.

## Claims

1. An end fitting (101, 201, 301) for a vehicle window wiper, the end fitting (101, 201, 301) comprising a lower face (107, 207, 307) extending in a plane (P, P1, P2), the end fitting (101, 201, 301) comprising a first part (105, 205, 305) made of a first material, and a second part (106, 206, 306) made of a second material, the second material being more flexible than the first material, the second part (106, 206, 306) being at least in contact with said plane (P, P1, P2).

2. An end fitting (101, 201, 301) according to claim 1, wherein the second part (105, 205, 305) is made of an elastic plastic material such as ethylene propylene diene monomer.

3. An end fitting according to claims 1 or 2, wherein the second part (105, 205, 305) extends at least partially along the plane (P, P1, P2).

4. An end fitting (101, 201, 301) according to claims 1 to 3, wherein the second part comprises at least a protrusion (211, 311) that protrudes beyond said plane (P1, P2), in a direction intersecting with said plan (P1, P2).

5. An end fitting according to claims 1 to 4, wherein the first part (105, 205, 305) comprises a receiving area (113, 213, 313) configured to receive a connecting area (109, 209, 309) of the second part (106, 206, 306), said receiving area (113, 213, 313) and said connecting area (109, 209, 309) being complementary to each other.

6. An end fitting according to claims 1 to 5, wherein the first part (105, 205, 305) is at least partially adjacent to the second part (106, 206, 306).

7. An end fitting (101, 201, 301) according to claims 1 to 6, wherein the end fitting (101, 201, 301) comprises a rear longitudinal face (112, 212, 312, 412) and a front longitudinal face (117, 217, 317, 417), said rear (112, 212, 312, 412) and front (117, 217, 317, 417) longitudinal face comprising a lower area (114, 214, 314), the second part (106, 206, 306) extending at least partially along said lower area (114, 214, 314) of the rear and/or front longitudinal face (112, 212, 312).

8. An end fitting (101, 201, 301) according to claims 1 to 7, wherein the second part (106, 206, 306) is configured to be overmolded on the first part (105, 205, 305).

9. An end fitting (301) according to claims 1 to 8, wherein the first part (305) made of the first material comprises an insertion slot (316), said insertion slot (316) being at the intersection of the lower area (314) of the rear longitudinal face (312) and the lower face (307) of the end fitting (301), said insertion slot (316) being configured to be crossed by the protrusion (311)

10. An assembly comprising:
• A wiper (2) comprising one longitudinal support (3) and a squeegee blade (4) intended to be pressed against the window,
• At least an end fitting (101, 201, 301) according to claims 1 to 9 configured to be positioned at least one end part of wiper.
